# EUROPEAN PATENT APPLICATION

(11) **EP 1 736 804 A1**
(43) Date of publication of application: **27.12.2006**
(21) Application number: 05380137.9
(22) Date of filing: 24.06.2005
(51) Int. Cl.: G02B 6/00, G01H 9/00, B81B 3/00

(54) **Cantilever-based detector device and method of manufacturing such a device**

(71) Applicant: CONSEJO SUPERIOR DE INVESTIGACIONES CIENTIFICAS, 28006 Madrid (ES)
(72) Inventor: Lechuga Gomez, Inst. de microelectr. de Madrid, Tres Cantos, 28760 Madrid (ES); Zinoviev, Kirill, Inst. de microelectr. de Madrid, Tres Cantos, 28760 Madrid (ES); Dominguez Horna, Carlos, (IMM-CNM), Tres Cantos, 28760 Madrid (ES); Plaza Plaza, José Antonio, (IMB-CNM), Tres Cantos, 28760 Madrid (ES); Cadarso Busto, Victor Javier, (IMB-CNM), Tres Cantos, 28760 Madrid (ES)
(74) Representative: Ungria Lopez, Javier

(57) **Abstract**

The detector comprises:
at least one cantilever (5) extending from a first part (2) towards a second part (3) across a gap (4), said cantilever (5) constituting a first optical waveguide; and
at least one second optical waveguide (6), positioned on said second part (3) and separated from the cantilever by a second gap (ΔX).

The first part (2) comprises a first layer structure (21) and the second part (3) comprising a second layer structure (31, 32). The first layer structure and the second layer structure are selected so that in a neutral reference position, the cantilever (5) and the second optical waveguide (6) are misaligned.

## Description

### FIELD OF THE INVENTION

The invention relates to the field of detection and measurement techniques based on the use of cantilevers, the deflection or vibration characteristics of which are used to determine characteristics of a sample.

### STATE OF THE ART

There are a large number of known devices for carrying out measurements using cantilevers, the deflection or vibration characteristics of which are related to physical, chemical and/or biological characteristics of the analysed samples or objects. For example, in the field of chemistry and biotechnology, such devices are frequently used to detect, for example, the presence of certain elements in a sample. Normally, cantilevers with small dimensions are used, frequently referred to as micro-cantilevers (nowadays, there are even cantilevers featuring nano-scale dimensions). The measurements are normally based on the fact that the deflection and/or the vibration characteristics of a cantilever depend on the mass of the cantilever (or of a portion of the cantilever) and/or on the surface stress (induced by the presence of chemical or biological species on its surface). Thus, for example, as the adherence of elements, particles or molecules to a surface of the cantilever increases the mass of (that portion of) the cantilever, it causes the deflection and/or the vibration characteristics of the cantilever to change. These changes can then be detected and used to determine features of the sample (for example, the presence of certain molecules or other elements in the sample).

In many prior art measurement systems involving cantilevers, the deflection or bending of a cantilever is detected by detection of a change in the path of light reflected off a distal portion of the cantilever. Now, such systems, based on the detection of a change in the path of the reflected light, tend to be very sensitive to vibrations. Further, use of an external light source and reader requires reliable and very accurate positioning of the light source, the detector and the cantilever or array of cantilevers (this kind of cantilevers are often provided in arrays). That is, there is a need for very precise mechanical actuators to correctly position the different elements involved. Further, the manipulation of said actuators may render it difficult to perform parallel real-time detection of, for example, biomolecules. Further, when experiments are to be repeated using several subsequent cantilever chips (which subsequently replace each other in a measurement system including the light source and the detector), the chips should all be aligned in a corresponding way, otherwise it will be impossible (or, at least, difficult) to reliably compare the data obtained using different cantilever chips.

These difficulties tend to increase with decreasing dimensions of the cantilevers, as smaller cantilevers imply a need for even more precise alignment of the cantilevers with the optical components used for producing light and for detecting the reflected light.

This problem was addressed in the U.S. patent application publ. no. US-A-2005/0018946, which proposes a solution based on the use of two optical waveguides, a first one of which extends along the cantilever (or constitutes the cantilever) and a second one of which is separated from the first one by a gap. The light coupling across the gap will depend on the alignment between the two optical waveguides and, thus, on the deflection of the cantilever (as an increased deflection increases the misalignment between the waveguides). Basically, US-A-2005/0018946 suggests that the deflection can be detected by means of comparing the light coupling across the gap at each moment with a "maximum" light coupling corresponding to a position in which the two optical waveguides are aligned, that is, have their respective end facing each other across the gap in an aligned manner.

### DESCRIPTION OF THE INVENTION

A first aspect of the invention relates to a detector device for performing measurements based on the detection of the deflection and/or oscillation of at least one cantilever, whereby said detector device comprises:
a structure having a first part and a second part separated, at least in part, by a first gap;
at least one cantilever extending from said first part towards said second part, across at least a portion of said first gap, said (at least one) cantilever constituting a first optical waveguide;
at least one second optical waveguide, positioned on said second part and separated from the cantilever by a second gap (one second optical waveguide can be provided in for each cantilever).

According to the invention, said first part comprises a first layer structure and said second part comprises a second layer structure, said first layer structure and said second layer structure being selected so that in a neutral reference position (such as a "non-biased" position in which the cantilever is not subjected to any biasing force), the cantilever and the second optical waveguide are not aligned but rather misaligned to a certain extent.

By means of suitably chosen layer structures, a suitable misalignment can be obtained. This is important for increased sensitivity of the device. The applicant of the present application has detected that using such a perfectly aligned configuration as suggested in US-A-2005/0018946 as a basis for the measurements, does not provide for an optimum sensitivity of the system. Instead, the applicant has found that it is preferable to guarantee that, in a "zero" position of the cantilever (which could be called a "neutral reference position"), that is, in the position in which the cantilever normally should be at the beginning of a measurement cycle, there is a certain "misalignment" between the opposed ends of the first and second waveguides, as such a misalignment will improve sensitivity of the device at said "zero" position. In accordance with the invention, this is obtained by providing the correspondingly chosen layer structures.

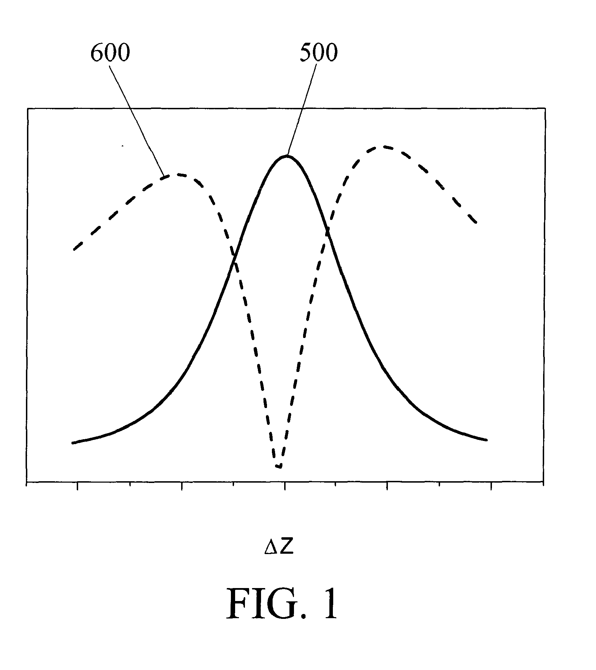

Figure 1 is a graph schematically illustrating light coupling efficiency (500) and sensitivity (600), as a function of the misalignment (ΔZ) of the opposed ends of two waveguides of a typical measurement device according to the invention described herein (or according to the device disclosed in US-A-2005/0018946). The sensitivity, which is a derivative of the coupling efficiency, goes down to a minimum when the misalignment is cero. Thus, it has been considered to be preferable to design the device so as to feature a certain (selected) misalignment at the "zero" position of the device.

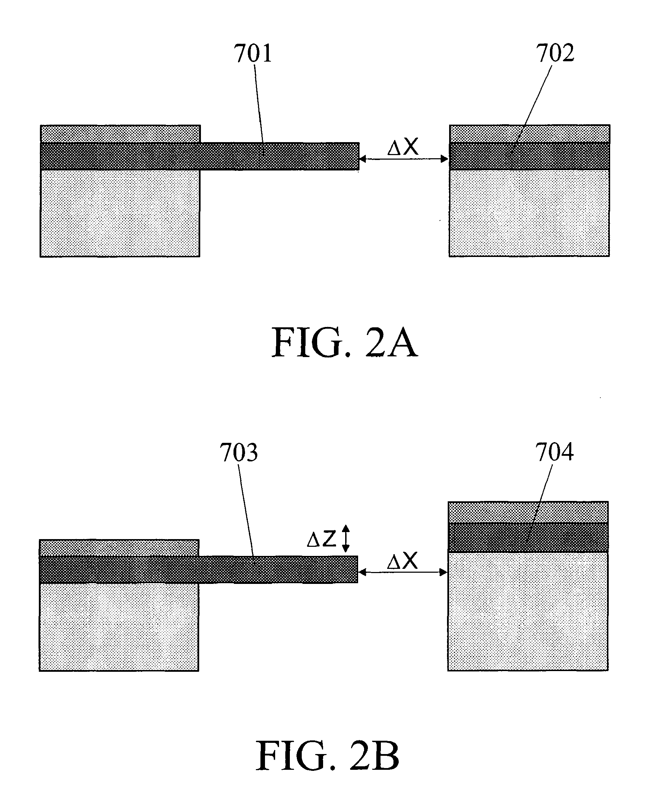

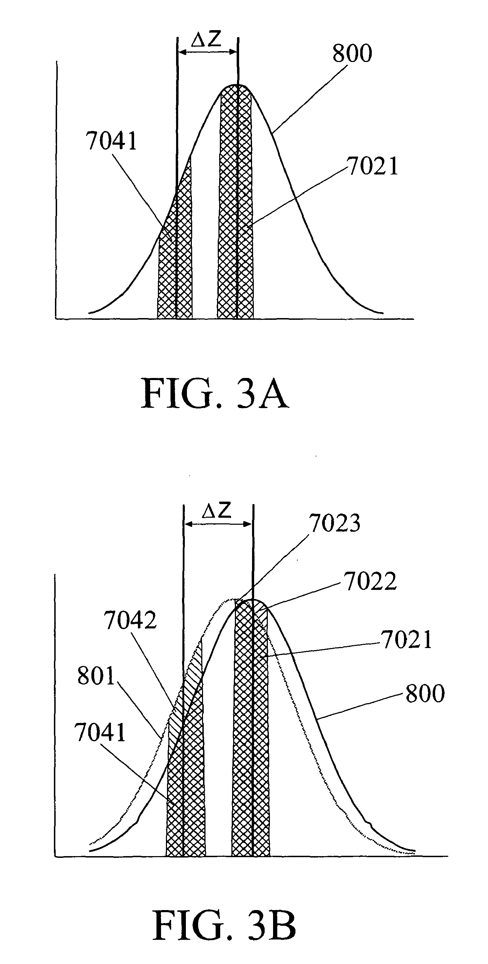

The relation between light coupling and sensitivity can be easily understood from figures 2A, 2B, 3A and 3B. Figure 2A shows two perfectly aligned optical waveguides 701 and 702, whereas figure 2B shows two slightly misaligned (ΔZ) optical waveguides 703 and 704.

The optical waveguides 701 and 703 transmit (and could, for example, correspond to the cantilevers of the present invention), and the optical waveguides 702 and 704 receive. Now, considering figure 3A, the curve illustrate the amplitude (vertical axis) of the power distribution along the "z" axis (the axis of the misalignment) at a distance ΔX from the end of the transmitting waveguide, that is, at the receiving end of the receiving waveguide 702 and 704.

The structure is reversible, waveguides 702 and 704 can transmit and the waveguides 701 and 703 can receive. However, then the parameters of the structure, the sensitivity, coupling efficiency, etc. are different.

Thus, the shadowed areas 7021 and 7041 correspond to the "amount" of light coupled into the optical waveguides 702 and 704, respectively. It can be observed how the "aligned" receiving optical waveguide 702 receives more light that the "misaligned" optical waveguide 704.

However, for considering sensitivity, we revert to figure 3B, where a new curve 801 has been added, showing the power distribution at the receiving ends of the receiving optical waveguides after a certain "displacement" along the "z" axis of the transmitting ends of the transmitting optical waveguides (said displacement could correspond to the bending of a cantilever due to a force exerted on the cantilever). It can be easily observed that although a larger absolute amount of light is coupled into the receiving optical waveguide 702 of the "aligned" embodiment, there is a far more pronounced "change" in the amount of light coupled into the optical waveguide 704 of the "misaligned" embodiment (this "change" obviously corresponds to the area 7042, which could be compared to the absolute value of the difference between the areas 7022 and 7023-corresponding to the aligned waveguides- in figure 3B). Thus, the "misaligned" embodiment is more sensitive to movement of the transmitting waveguide, than the aligned embodiment.

Thus, a certain amount of misalignment can be preferred and, actually, helpful, not only in order to increase sensitivity but also in order to facilitate recognition of the "direction" of movement of the transmitting optical waveguide. The layer structures of the present invention provide an excellent basis for flexible implementation of cantilever systems in which the cantilever is an optical waveguide which can be selectively misaligned with regard to another optical waveguide, for sensitive detection based on measurements of the light coupling between the two optical waveguides.

The misalignment can be conveniently chosen as a function of the distance between the opposing ends of the first and second optical waveguides and as a function of the thickness of these waveguides. The skilled person can easily carry out the necessary calculations in view of the needs and characteristics of each specific case.

The first layer structure and the second layer structure can (be?)selected such that said cantilever corresponds to a layer placed on top of a first series of layers comprising at least one layer, and said second optical waveguide is placed on top of a second series of layers comprising at least one layer, said second series of layers comprising a different number of layers than said first series of layers. (In the present specification, the term "series of layers" is intended to mean a number of layers placed on top of each other, that is, a set of stacked layers or a sequence of layer. The number of layers can be 1, 2, 3, etc., that is, the term "series" should not be interpreted so as to exclude the possibility of the series of layers comprising one single layer. Actually, in one embodiment described below, at least one series of layers will comprise one single layer.)

Alternatively or complementarily, the first layer structure and the second layer structure can be selected so that said cantilever corresponds to a layer placed on top of a first series of layers comprising at least one layer (concerning the term "series", cf. what has been stated above) and said second optical waveguide is placed on top of a second series of layers comprising at least one layer, wherein in said second series of layers, at least one layer differs in thickness from a corresponding layer of the first series of layers.

Actually, said first layer structure and said second layer structure can be selected so that said cantilever corresponds to a layer placed on top of a first series of layers comprising at least one layer and said second optical waveguide is placed on top of a second series of layers comprising at least one layer, wherein in said second series of layers, at least one layer differs in thickness from a corresponding layer of the first series of layers, and wherein said second series of layers comprises a different number of layers than said first series of layers.

That is, by choosing the number of layers and the thickness of the layers, a desired misalignment can easily be obtained and established in a very reliable way (easily adjusted by controlling the distribution and manufacturing of the layers). Thus, the invention provides a basis for a cantilever system design that can be easily implemented using existing technologies for layered systems involving micro- or nanocantilevers.

The cantilever(s) can be constituted by one single layer made up of one single material (or by several layers made up of the same material). The use of one single material for the cantilever is advantageous as it reduces the risk of the cantilever being caused to bend due to temperature (a cantilever comprising various layers of different materials may tend to bend as it is influenced by temperature, as the different materials can have different thermal expansion coefficients.

The cantilever can be made of SiO₂. This material can be a sufficiently effective optical waveguide when it is surrounded by, for example, air or other fluids having a lower refractive index than SiO₂. Further, SiO₂ is an example of materials that can be used while allowing for manufacturing using conventional methods for processing layered silicon based devices.

The second optical waveguide can be made up of a different material than said cantilever, for example, the second optical waveguide can be made of Si₃N₄.

The structure mentioned above, comprising said first and second part, can comprise a first layer having a first portion having a larger thickness and second portion having a smaller thickness, wherein said first part can be constructed on top of a first one of said first portion and second portion and said second part can be constructed on top of a second one of said first portion and second portion, thus providing for or contributing to the misalignment referred to above.

Said first layer can be made of Si (silicon). The device can further comprise a second layer on top of said first layer, said second layer corresponding to said first part and to said second part, said second layer being made of SiO₂. Thus, a part of said second layer can constitute the cantilever. The second optical waveguide can comprise a further layer placed on said second layer.

The device can further comprise a third optical waveguide corresponding to a layer placed on top of the layer corresponding to the cantilever, whereby said third optical waveguide can terminate in correspondence with the beginning of the first gap (that is, in the vicinity of the beginning of the first gap) and be arranged to couple light into said cantilever in correspondence with said beginning of the first gap. Thus, the cantilever can be part of a layer having a first refractive index, sandwiched between a layer having a second refractive index and said third optical waveguide, said third optical waveguide having a third refractive index, said first refractive index being smaller than said second refractive index and smaller than said third refractive index. Thus, light will pass along the third optical waveguide until the gap, that is, until, in one of the alternatives mentioned above, the layer having the second refractive index ends at the gap, and then the light is coupled into the cantilever and can continue to the free end of the cantilever without any loss caused by said material having the second refractive index, whereby said material can be chosen to be, for example, Si. This provides for many possibilities of choice of materials, for example, for a structure based on subsequent layers of Si, SiO₂ (for the cantilever) and Si₃N₄, which means that the structures can be obtained using conventional silicon based technologies of manufacture.

As stated above, said third optical waveguide can be made of Si₃N₄.

The third optical waveguide and/or the cantilever can be provided with a diffraction grating for coupling light into said third optical waveguide and cantilever, respectively.

Another aspect of the invention relates to a method of manufacturing a detector device for performing measurements based on the detection of the deflection and/or oscillation of at least one cantilever. The method comprises the step of producing a structure of layers comprising a structure having a first part and a second part separated, at least in part, by a first gap; at least one cantilever extending from said first part towards said second part, across at least a portion of said first gap, said cantilever constituting a first optical waveguide; at least one second optical waveguide, positioned on said second part and separated from the cantilever by a second gap.

In accordance with the invention, the step of producing said structure of layers is carried out such that said first part comprises a first layer structure and said second part comprises a second layer structure, said first layer structure and said second layer structure being established such that in a neutral reference position, the cantilever and the second optical waveguide are not aligned, but misaligned. In this way, a misalignment is established that, when suitably chosen, provides for enhanced sensitivity, as outlined above.

The use of layer structures makes it possible to establish a desired misalignment, the amount of which can be chosen as a function of the distance between the facing ends of the cantilever and the second optical waveguide and as a function of the thickness of said cantilever and second optical waveguide, in an easily implemented manner, using routine methods of production of layer structures based on, for example, silicon (Si) materials.

Said first layer structure and said second layer structure can established such that said cantilever corresponds to a layer placed on top of a first series of layers comprising at least one layer (in what regards the term "series of layers", cf. what has been stated above), and said second optical waveguide is placed on top of a second series of layers comprising at least one layer, said second series of layers comprising a different number of layers than said first series of layers.

Also, or as an alternative, said first layer structure and said second layer structure can be established such that said cantilever corresponds to a layer placed on top of a first series of layers comprising at least one layer and said second optical waveguide is placed on top of a second series of layers comprising at least one layer, wherein in said second series of layers, at least one layer differs in thickness from a corresponding layer of the first series of layers.

That is, for example, said first layer structure and said second layer structure can be established such that said cantilever corresponds to a layer placed on top of a first series of layers comprising at least one layer and said second optical waveguide is placed on top of a second series of layers comprising at least one layer, wherein in said second series of layers, at least one layer differs in thickness from a corresponding layer of the first series of layers, and wherein said second series of layers comprises a different number of layers than said first series of layers.

Thus, by choosing the thickness and/or numbers of the layers of the first and second part of the structure, the skilled person will easily obtain a structure with a desired misalignment between the cantilever and the second optical waveguide, when the cantilever is in the neutral (such as the non-biased) position.

The cantilever can be produced out of a single layer made up of one single material, for example, SiO₂. the step of producing the cantilever out of said single layer can comprise the step of eliminating a portion of said layer along the cantilevers so as to make the cantilever thinner and to reduce the stress gradient.

The second optical waveguide can be made of a different material than said cantilever, for example, of Si₃N₄.

The step of producing a structure of layers can comprise the step of reducing (or increasing) the thickness of a portion of a first layer such that said first layer is provided with a first portion having a larger thickness and second portion having a smaller thickness, and constructing said first part on top of a first one of said first portion and second portion, and constructing said second part on top of a second one of said first portion and second portion. Thus, the misalignment can be made to depend on the difference between the thicknesses of said first portion and said second portion. The reduction (or increase) of the thickness of a portion of a layer (such as a silicon (Si) layer) is something that can be carried out with routine methods used in silicon wafer technologies.

Said first layer can made of Silicon (Si).

The step of producing a structure of layers can further comprise the step of depositing or growing a second layer on top of said first layer, said second layer corresponding to said first part and to said second part, said second layer being made of SiO₂. Thus, the cantilever can be established by eliminating a part of said second layer (for example, in correspondence with said first and second gaps), such that a remaining part of said second layer constitutes the cantilever extending across said first gap until it reaches said second gap that separates the cantilever from the second optical waveguide.

The second optical waveguide can be established by depositing or growing a layer on said second layer and by eliminating a part of said layer deposited on said second layer.

The method can comprise a step of producing a third optical waveguide by depositing or growing a layer on top of the layer corresponding to the cantilever, and by eliminating a part of said layer, whereby said third optical waveguide is produced such that it terminates in correspondence with a beginning of the first gap so as to couple light into said cantilever in correspondence with said beginning of the first gap. This can be a practical solution in the case of, for example, the cantilever being shaped out of an SiO₂ layer deposited on an Si layer. Due to the relation between the refractive indexes of the two layers, if light were coupled into the cantilever layer at a position where said cantilever layer is still on top of the Si layer and far from the first gap, there would be substantial losses in light intensity before the light would arrive at the gap. These losses could make the device non-workable. Thus, it can be preferred to couple light into the cantilever in correspondence with the beginning of the gap, so that the light can then travel towards the free end of the cantilever without any losses to the Si layer or similar.

The layer corresponding to the cantilever can be selected to have a first refractive index, the structure being produced so that the cantilever becomes sandwiched between a layer being selected to have a second refractive index (for example, an Si layer as mentioned above) and said third optical waveguide, said third optical waveguide being selected to have a third refractive index, said first refractive index being smaller than said second refractive index and smaller than said third refractive index. The third optical waveguide can be made of Si₃N₄. Thus, if the cantilever layer is made of SiO₂ and the layer having the second refractive index is made of Si, the above-mentioned relation between the magnitudes of the refractive indexes is achieved.

The bottom surface of the third waveguide can be located at the same level or at a lower level than the upper cantilever surface. This is a condition for efficient light coupling between the third waveguide and the cantilever.

Light coming from an external source can be coupled in the third waveguide by standard coupling methods (butt or prism coupling). A diffraction grating can be established in the third optical waveguide (for coupling light into said third optical waveguide) and/or the cantilever can be provided with a diffraction grating (for coupling light into the cantilever).

The cantilever can be a multimode waveguide, but single mode operation can be provided by applying such a diffraction grating directly to the cantilever, for example, at the beginning of the first gap. The diffraction grating can comprise a periodic corrugation of either one or both of the surfaces of the third optical waveguide and/or of the cantilever, respectively. The period of corrugation can be suitably chosen by the skilled person. Single mode operation can be preferred as it tends to make the sensitivity and behaviour of the device easier to predict.

Of course, one or more of the waveguides can be provided with cladding materials to improve light transmission through the waveguides.

The third optical waveguide, if used, should be thick enough to provide existence of a waveguide mode and thin enough to provide efficient energy transfer into the cantilever.

The device can be attached to a system for inducing a regular vibration of the cantilever. If so, the frequency of vibration of the cantilever can be assessed by the frequency of light coupling across the gap. Presence of any substance on the cantilever surface alters the mass and, thus, the resonant frequency of vibration of the cantilever. A change in that resonant frequency indicates presence of the added mass on the cantilever surface. Regular vibration of the cantilever can be induced, e.g., by mechanical or acoustic excitation of the cantilever or by magnetic excitation of a magnetically coated cantilever (cf., e.g., Tamayo et al, "Chemical sensors and biosensors in liquid environment based on microcantilevers with amplified quality factor", Ultramicroscopy 86: pages 167-173 (2001)*).* The vibration can be induced by a device coupled with the cantilever, i.e., contacting or otherwise communicating with the cantilever in a way so that energy from the device induces vibration of the cantilever. The cantilever exhibits a characteristic resonant frequency, which can be assessed using known methods (cf. *Tamayo et al., supra,* for example).

As there is an "initial" misalignment, light intensity can increase or decrease if the cantilever is bent, depending on the direction of the bending. Thus, the "initial" misalignment makes it possible to distinguish between "positive" or "negative" bending of the cantilever.

The shape of the cantilever can be chosen by the skilled person. For example, the cantilever can be chosen to have a substantially rectangular cross section and to have a substantially constant width and thickness along its longitudinal extension across the gap, towards the second waveguide. The skilled person will choose the shape so as to obtain a suitable behaviour of the cantilever, both as regards its behaviour as an optical waveguide and as regards its behaviour as a cantilever designed to bend when subjected to external forces.

Temperature-induced fluctuations in cantilever deflection can be avoided by maintaining the cantilever (or the entire detector) at substantially the same temperature as the sample (for example, a fluid) with which the cantilever is in contact. Anther way to avoid the non desired temperature-induced fluctuations is the use of one of the cantilevers within the array as a reference cantilever.

The cantilever is preferably made of a material with a low refractive index so as to enlarge the size of the propagation mode and to reduce the divergence of light exiting the cantilever into the second gap, that is, the gap between the free end of the cantilever and the opposed end of the second optical waveguide.

The waveguides can be TIR (Total Internal Reflection) waveguides made of a dielectric material with relatively low absorption losses. The waveguides may be optically isolated from the substrate by a buffer layer made of a material with a lower refractive index compared to the refractive index of the waveguide material. The cantilever can be made as an extension of the buffer layer. The cantilever can be thinner than the buffer layer.

The waveguides can be ARROW (Anti-Resonant Reflection Optical Waveguide). In this case, the cantilever can be an extension of the core layer of the ARROW.

The waveguides can be fabricated in the buffer layer and integrated therein by implantation or diffusion of another material in such a way that part of the material increases its refractive index.

The waveguides used in the detector can be a combination of those types of waveguides stated above (for instance, the third waveguide can be an ARROW structure and second waveguide an implanted one), and the first waveguide or cantilever can be a TIR structure.

It is important that light conveyed by way of the waveguides extending across the first and second part not be significantly transmitted into or absorbed by said parts. This can be prevented by fabricating the parts of the first and second part that are in contact with the respective optical waveguides so as to have a lower refractive index than that of the waveguide material, by interposing a cladding material between the waveguides and surrounding layers, or by forming a distributed Bragg reflector such as that of an anti-resonant waveguide.

If deflections of multiple cantilevers are to be compared, then the cantilevers could be substantially identical in shape and composition.

If necessary in order to promote the adhesion of some biological layer on top of the cantilever, a first metallic layer can be interposed on one face of the cantilever in order to promote the surface forces on the cantilever. A second metallic layer can be interposed between the first metallic layer and the face of the cantilever, to enhance bonding between the cantilever face and the first metallic layer. If metallic layers are applied, special attention should be paid in order to compensate any bimetallic effects which may introduce undesirable bending of the cantilever.

Deposition of the metal layer on the cantilever surface may cause additional losses but can also provide filtering if the cantilever is multimode. To avoid high losses, the cantilever may be made short. For example, a 200 µm long cantilever covered with a 20 nm thick gold layer allows for 40% losses for the fundamental distribution of the electric field (fundamental propagation mode) and 80 % losses for the first propagation mode. To reduce the losses the cantilever can be covered with metal not along the whole length, but only partially.

Potential thermal expansion or contraction of the cantilever, the waveguides and/or other parts of the structure in the intended temperature ranges of operation and fabrication should be taken into account to avoid expansion-induced contact between the distal end of the cantilever and the second waveguide, for example. The light transmitting properties of the fluid for which the detector is designed should also be taken into account in order to achieve acceptable light coupling between the waveguides. For example, in low index contrast waveguides with a large mode field, a second gap of 1-3 µm between the ends of the cantilever and the second waveguide can be suitable.

The cantilevers in an arrayed sensor can be located in separate cavities, that is, extend across separate gaps. This prevents light from being coupled between adjacent cantilever/second waveguide units and also makes it possible to supply different samples to different cantilevers.

The waveguides can be fabricated on a unitary substrate; this permits relatively easy (mis)alignment of the cantilevers and the corresponding ends of the second waveguides.

### BRIEF DESCRIPTION OF THE DRAWINGS

To complete the description and in order to provide for a better understanding of the invention, a set of drawings is provided. Said drawings form an integral part of the description and illustrate preferred embodiments of the invention, which should not be interpreted as restricting the scope of the invention, but just as an example of how the invention can be embodied. The drawings comprise the following figures:
Figure 1 shows a diagram schematically illustrating the relation between light coupling and sensitivity.
Figure 2A and 2B schematically show aligned and misaligned optical waveguides.
Figures 3A and 3B illustrate the power transmitted into a receiving optical waveguide in the case of aligned and misaligned waveguides.
Figure 4 is a schematic perspective view of a preferred embodiment of the invention.
Figures 5A-5E schematically illustrate a method of manufacturing a device in accordance with the invention.
Figure 6 illustrates an arrangement for detecting deflection of a cantilever beam using a device in accordance with the invention. Reflected light was used to measure the cantilever deflection using the Atomic Force Microscope detection principle (detection of a change in the path of light reflected from the cantilever).
Figure 7 illustrates an arrangement for detecting resonant frequencies using a device in accordance with the invention.

### DESCRIPTION OF PREFERRED EMBODIMENTS OF THE INVENTION

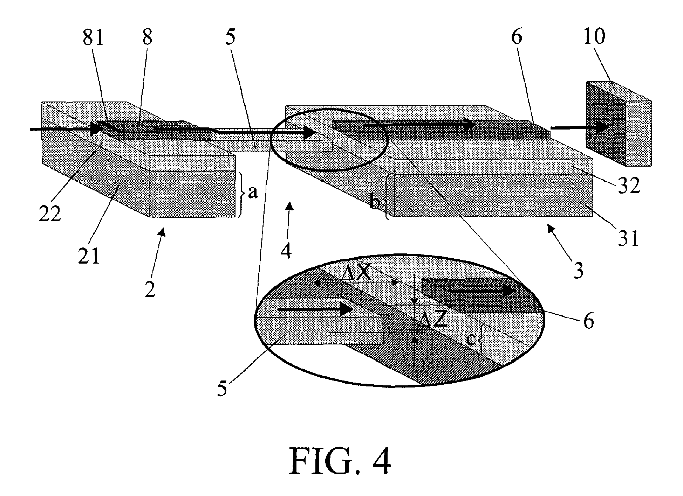

Figure 4 discloses a preferred embodiment of the invention, wherein the detector device comprises a structure having a first part 2 and a second part 3 separated, at least in part, by a first gap 4. The first part and the second part are both formed out of the same silicon (Si) layer 21, 31, which has been partly deleted to form the gap 4 between the first part 2 and the second part 3. However, a portion (not shown) of said silicon layer remains and serves, *inter alia,* to maintain the distance between the first part and the second part, that is, to maintain the size of the gap 4. The silicon layer can be thicker at the first part than at the second part, as will be explained further below.

On top of the silicon layer there is a layer of SiO₂ (reference numeral 22 at the first part 2 and reference numeral 32 at the second part). A portion of said SiO₂ layer has been eliminated in correspondence with the gap, but a portion of said layer remains, forming a cantilever 5, such as a micro- or nano-cantilever. The cantilever 5 constitutes a first optical waveguide.

On top of the SiO₂ layer 32 of the second part, there is a remaining portion of a third layer of Si₃N₄; said remaining portion constitutes a second optical waveguide 6.

In figure 4, an enlarged view of part of the system shows how a transmitting end of the cantilever 5 is placed at a distance ΔX (in an "x" axis direction corresponding to the longitudinal axis of the cantilever) from a receiving end of the second optical waveguide. Basically, the cantilever 5 and the second optical waveguide 6 are butt coupled so as to allow for coupling of light from the cantilever into the second optical waveguide. However, figure 4 also illustrates how the longitudinal axis of the cantilever is displaced a distance ΔZ with regard to the longitudinal axis of the second optical waveguide (these two longitudinal axes are parallel in this embodiment, but they do not coincide but are separated a distance ΔZ). Here, ΔZ represents a displacement or misalignment between the two waveguides in the "z" direction, said direction corresponding to the direction of movement of the free or transmitting end of the cantilever when the cantilever is bent.

Due to this misalignment, an increased sensitivity is obtained, as explained above.

The size of the misalignment can be easily chosen by the skilled person, for example, as a function of the difference in the thickness between the silicon layer 21 (having a thickness "a") and the silicon layer 31 (having a thickness "b") and by the thickness of the SiO₂ layer 32 (having a thickness "c"). The first optical waveguide, that is, the cantilever 5, is placed on top of one single layer having a thickness "a", whereas the second optical waveguide 6 is placed on top of two layers, one having a thickness "b" and one having the thickness "c". Further, the cantilever and the second optical waveguide can have different thicknesses. The suitable choice of the thickness of each layer can provide the adequate displacement ΔZ for each specific case. Said displacement can be selected by the skilled person so as to optimise sensitivity, based on, for example, an algorithm based on the curves illustrated in figures 3A and 3B, so as to provide for a maximum change in light coupling between the cantilever and the second optical waveguide when the cantilever is bent (for example, due to adherence to the cantilever of some element the presence of which in a sample is to be detected).

The arrows in figure 4 illustrate the way light passes along the device. Light is coupled into the cantilever using a third optical waveguide 8 placed on top of the SiO₂ layer 22. Said third optical waveguide is made of Si₃N₄ (and is actually produced out of the same layer as the second optical waveguide, as will be further explained below).

If light were to be coupled into the cantilever by coupling the light into the layer 22 at the left-hand end thereof (in figure 4), there would be enormous losses of light, due to the relation between the refractive indexes of the SiO₂ layer 22 and the Si layer 21 (as the refractive index of the layer 22 is smaller than the refractive index of layer 21). Thus, light is first coupled into the third optical waveguide 8, using a diffraction grating 81 placed wherever along said third optical waveguide in figure 4. Said third optical waveguide 8 is of a material having a larger refractive index than the material of the layer 22 corresponding to the cantilever.

Now, the third optical waveguide 8 terminates at the first gap 4, and so does the silicon layer 21. Thus, here, light is coupled from the third optical waveguide into the cantilever (that is, the third optical waveguide and the cantilever form a planar coupler). From the cantilever, light is then coupled across the second gap ΔX and into the second optical waveguide 6. The extent to which light is coupled into the second optical waveguide will depend, *inter alia,* on the original misalignment ΔZ and on any displacement of the free end of the cantilever from the "neutral" position, due to, for example, external influences that can correspond to characteristics to be detected by the device (for example, the presence of certain elements in a sample). The light coupled into the second optical waveguide is then fed to a photodetector 10, that will detect the intensity of the light. The photodetector is coupled to a data processing system (not shown) for processing the output signals from said photodetector. There are many commercially available data processing systems, and the skilled person will be able to select the one most in accordance with his or her needs.

Instead of using the third optical waveguide 8, light can also be directly injected into the cantilever, in which case the cantilever can be provided with a refraction grating at any suitable position, preferably between the beginning of the gap 4 and the free and of the cantilever.

In practice, the devices will not include only one cantilever but rather a plurality of cantilevers, forming, for example, a cantilever array. Each cantilever can be arranged in correspondence with a corresponding second optical waveguide and, if necessary or convenient, a third optical waveguide. However, for simplicity, only one cantilever is shown in the drawings.

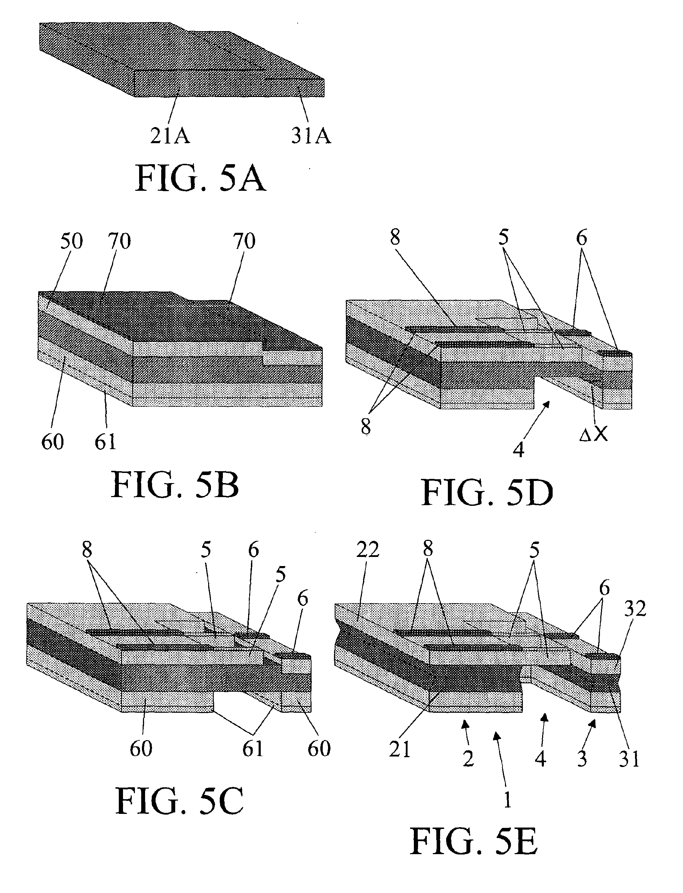

Figures 5A-5E schematically illustrate a method of manufacturing the device. First, a silicon (Si) layer is provided, for example, using a 300 µm thick double-sided polished silicon wafer, cleaned using hot alkaline and acidic hydrogen peroxide solutions (a process known as RCA Standard Clean). In a first step, the silicon wafer is patterned so as to create two portions having different thickness, namely, a first portion 21A having a first thickness and a second portion 31A having a second thickness, as shown in figure 5A. Next, silicon oxide (SiO₂) layers (50, 60) are thermally grown by wet oxidation on both sides of the wafer (for example, by maintaining the wafer at approximately 1000 °C for several hours, while applying a wet oxygen flow to the surfaces, whereby layers can be formed having a thickness in the order of 1 µm). This is followed by a further step of RCA cleaning. Then, a high temperature LPCVD (Low Pressure Chemical Vapor Deposition) silicon nitride (Si₃N₄) layer 70 is deposited on both sides of the wafer, being removed from one side (back side) of the wafer and maintained on top of one of the silicon oxide layers 50; said silicon nitride layer 70 can have a thickness in the order of 200 nm. PECVD (Plasma Enhanced Chemical Vapor Deposition) silicon oxide 61 is deposited on the other silicon oxide layer 60 at the back side of the wafer. Thermal and PECVD silicon dioxide layer on the back side are used later as a mask material for the following Deep Reactive Ion Etching (DRIE) applied to make the cavity (the gap 4) under the cantilevers. At this point (figure 5B) the formation of the structural layers is finished. Standard pattern transfer process, like photolithography, and reactive ion etching (RIE) to remove the material, are applied to form the second 6 and third 8 optical waveguides in the silicon nitride layer 70 and the cantilevers 5 in the silicon dioxide layer 50.

The same processes can be used to form the mask for DRIE on the back side of the wafer. DRIE from both sides can be applied in order to form the cavities under and around the cantilevers. For this purpose, the back side of the waver (layer 61) can be coated with a photoresist mask in a pattern that defines the gap 4 (which is not covered by said photoresist mask) and the wafer is then subjected to RIE to remove portions of the SiO₂ layers (60, 61) to define part of the gap 4 (figure 5C). The front side of the wafer is then coated with a photoresist mask in a pattern that defines the cantilevers covered with the photoresist mask (the silicon nitride waveguides formed before are also protected by the photoresist mask), and the wafer is exposed. The wafer is then subjected to reactive ion etching to remove portions of the wafer not coated with the photoresist mask.

Then the wafer is subjected to DRIE using the same photoresist mask in order to drill shallow (5-30 µm) cavities around the cantilevers (figure 5D) on the front side. DRIE is then applied from the back side using the silicon oxide mask to finally establish the gap 4. The photoresist mask is removed with oxygen plasma. The wafer is immersed in a 75 % TMAH (Tetra Methyl Ammonium Hydroxide) solution at about 80 °C until all of the silicon will be removed under the cantilevers (figure 5E). Then the bottom layer of the cantilevers is eliminated to thin the cantilevers and to reduce the stress gradient. Said stress gradient appears in the cantilever due to different properties of the silicon dioxide layer in the top and the bottom parts due to non uniformity of the material growing procedure. Finally the cantilevers are released by etching silicon in TMAH solution (figure 5E). A yield close to 100% can be achieved using this technology, and the cantilever beams can be fabricated so as to be practically flat.

Cantilever distal tip deflection sensitivity to external forces scales i) quadratically with the value (length divided by thickness) and ii) inversely with the biaxial modulus of the cantilever beam. Using a silicon oxide (SiO₂) cantilever having a rectangular cross section wherein the cantilever has a length of 200 µm in its long dimension (*i.e.,* anchor to distal tip, *i.e.,* the extension of the cantilever across the first gap 4), a width of 40 µm, and a thickness of 0.6 µm, the stiffness of the cantilever will be about 0.050 Newton per meter (N/m). Thus, a force of 5X10⁻¹¹ N could be expected to deflect the tip of this cantilever by about 4.5 nm.

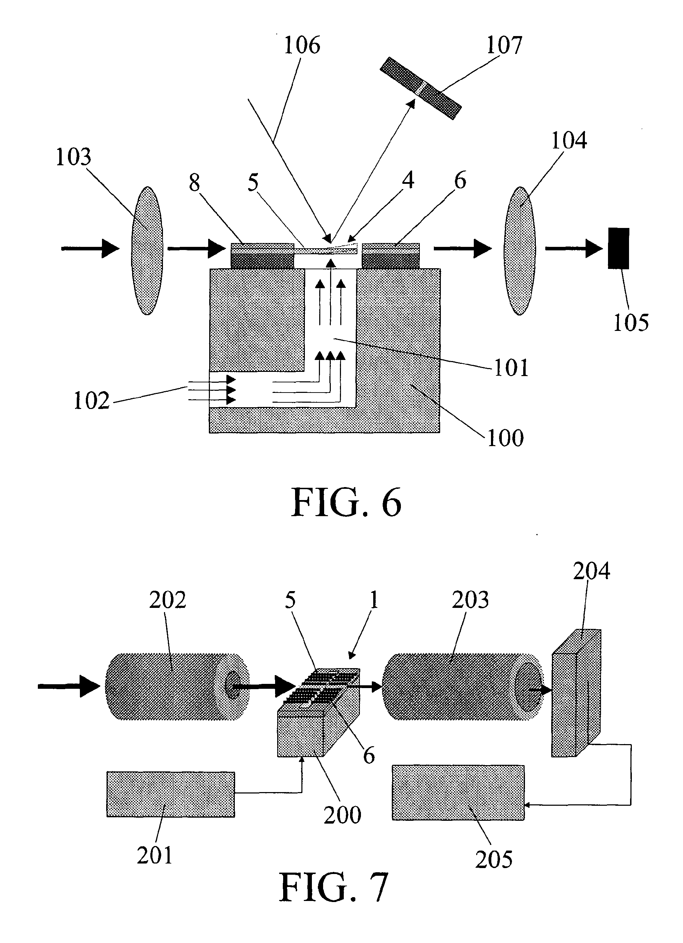

The change of the output signal versus cantilever deflection can be measured actuating the cantilever by air flow. As illustrated in figure 6, the device/chip can be placed on a holder 100 with a channel 101 drilled inside so that the flux going through the channel passes through the gap 4 pushing the cantilever 5 up or down (depending on whether over or under atmospheric pressure is supplied to the channel input 102). The light is launched into the third optical waveguide 8 using direct focusing with an objective lens 103 and the light is collected at the output of the second optical waveguide 6 by another lens 104 and monitored by a photodetector 105. To control the deviation of the cantilever a laser beam 106 can be directed to the cantilever, and the beam bounced from the surface can be monitored with a position sensitive photodetector 107 (as done in conventional systems based on the detection of changes in the path of the reflected light). Thus the change in the signal at the output from the cantilever device can be linked to the deflection of the cantilever caused by the external force, thus making it possible to "tune" the device or a system incorporating the device.

In order to measure frequencies, the structure 1 of the device can be located on a piezoelectric actuator 200 connected to a sine waveform synthesizer 201 in order to provide resonance mode excitation of the cantilevers 5. Light can be coupled into the device using a first objective 202 and, at the exit of the second waveguides 6, light can be collected by a second objective 203 and projected to an Si photodetector 204 connected to an oscilloscope 205. Being out of resonance, the output signal should not show any oscillations. In resonance mode the photodetector 204 should detect a periodical change in the photocurrent.

In this text, the term "comprises" and its derivations (such as "comprising", etc.) should not be understood in an excluding sense, that is, these terms should not be interpreted as excluding the possibility that what is described and defined may include further elements, steps, etc.

On the other hand, the invention is obviously not limited to the specific embodiment(s) described herein, but also encompasses any variations that may be considered by any person skilled in the art (for example, as regards the choice of materials, dimensions, components, configuration, etc.), within the general scope of the invention as defined in the claims.

## Claims

1. Detector device for performing measurements based on the detection of the deflection and/or oscillation of at least one cantilever, whereby said detector device comprises:
a structure (1) having a first part (2) and a second part (3) separated, at least in part, by a first gap (4);
at least one cantilever (5) extending from said first part (2) towards said second part (3), across at least a portion of said first gap (4), said cantilever (5) constituting a first optical waveguide;
at least one second optical waveguide (6), positioned on said second part (3) and separated from the cantilever by a second gap (ΔX);
said first part (2) comprising a first layer structure (21) and said second part (3) comprising a second layer structure (31, 32), said first layer structure and said second layer structure being selected so that in a neutral reference position, the cantilever (5) and the second optical waveguide (6) are misaligned.

2. Device according to claim 1, wherein said first layer structure (21) and said second layer structure are selected so that said cantilever (5) corresponds to a layer (22) placed on top of a first series of layers comprising at least one layer (21), and said second optical waveguide (6) is placed on top of a second series of layers comprising at least one layer (31, 32), said second series of layers comprising a different number of layers than said first series of layers.

3. Device according to claim 1, wherein said first layer structure (21) and said second layer structure (31, 32) are selected so that said cantilever (5) corresponds to a layer (22) placed on top of a first series of layers comprising at least one layer (21) and said second optical waveguide (6) is placed on top of a second series of layers comprising at least one layer (31, 32), wherein in said second series of layers, at least one layer (31) differs in thickness from a corresponding layer (21) of the first series of layers.

4. Device according to claim 1, wherein said first layer structure (21) and said second layer structure (31, 32) are selected so that said cantilever (5) corresponds to a layer (22) placed on top of a first series of layers comprising at least one layer (21) and said second optical waveguide (6) is placed on top of a second series of layers comprising at least one layer (31, 32), wherein in said second series of layers, at least one layer (31) differs in thickness from a corresponding layer (21) of the first series of layers, and wherein said second series of layers comprises a different number of layers than said first series of layers.

5. Device according to any of the preceding claims, wherein the cantilever (5) is constituted by one single layer (22) made up of one single material.

6. Device according to any of claims 1-4, wherein the cantilever (5) is constituted by a plurality of layers made up of the same material.

7. Device according to any of claims 5 or 6, wherein the cantilever (5) is made of SiO₂.

8. Device according to any of the preceding claims, wherein the second optical waveguide (6) is made up of a different material than said cantilever (5).

9. Device according to claim 8, wherein said second optical waveguide is made of Si₃N₄.

10. Device according to any of the preceding claims, wherein the structure (1) comprises a first layer (21, 31) having a first portion (21A) having a larger thickness and second portion (31A) having a smaller thickness, wherein said first part (2) is constructed on top of a first one (21A) of said first portion and second portion and said second part (3) is constructed on top of a second one (31A) of said first portion and second portion.

11. Device according to claim 10, wherein said first layer is made of Si.

12. Device according to any of claims 10 and 11, further comprising a second layer (22, 32) on top of said first layer (21, 31), said second layer corresponding to said first part (2) and to said second part (3), said second layer being made of SiO₂.

13. Device according to claim 12, wherein a portion of said second layer (22) constitutes the cantilever (5).

14. Device according to any of the preceding claims, wherein the second optical waveguide (6) comprises a layer placed on said second layer (32).

15. Device according to any of the preceding claims, further comprising a third optical waveguide (8) corresponding to a layer placed on top of the layer (22) corresponding to the cantilever (5), said third optical waveguide terminating in correspondence with the beginning of the first gap (4) and being arranged to couple light into said cantilever (5) in correspondence with said beginning of the first gap (4).

16. Device according to claim 15, wherein the cantilever (5) is part of a layer (22) having a first refractive index, sandwiched between a layer (21) having a second refractive index and said third optical waveguide (8), said third optical waveguide having a third refractive index, said first refractive index being smaller than said second refractive index and smaller than said third refractive index.

17. Device according to claim 15 or 16, wherein said third optical waveguide is made of Si₃N₄.

18. Device according to any of claims 15-17, wherein the third optical waveguide (8) is provided with a diffraction grating (81) for coupling light into said third optical waveguide.

19. Device according to any of the preceding claims, wherein the cantilever is provided with a diffraction grating for coupling light into the cantilever.

20. Method of manufacturing a detector device for performing measurements based on the detection of the deflection and/or oscillation of at least one cantilever, said method comprising the step of producing a structure of layers comprising:
a structure (1) having a first part (2) and a second part (3) separated, at least in part, by a first gap (4); at least one cantilever (5) extending from said first part (2) towards said second part (3), across at least a portion of said first gap (4), said cantilever (5) constituting a first optical waveguide; at least one second optical waveguide (6), positioned on said second part (3) and separated from the cantilever by a second gap (ΔX);
whereby said step of producing said structure of layers is carried out such that said first part (2) comprises a first layer structure (21) and said second part (3) comprises a second layer structure (31, 32), said first layer structure and said second layer structure being established such that in a neutral reference position, the cantilever (5) and the second optical waveguide (6) are misaligned.

21. Method according to claim 20, wherein said first layer structure (21) and said second layer structure are established such that said cantilever (5) corresponds to a layer (22) placed on top of a first series of layers comprising at least one layer (21), and said second optical waveguide (6) is placed on top of a second series of layers comprising at least one layer (31, 32), said second series of layers comprising a different number of layers than said first series of layers.

22. Method according to claim 20, wherein said first layer structure (21) and said second layer structure (31, 32) are established such that said cantilever (5) corresponds to a layer (22) placed on top of a first series of layers comprising at least one layer (21) and said second optical waveguide (6) is placed on top of a second series of layers comprising at least one layer (31, 32), wherein in said second series of layers, at least one layer (31) differs in thickness from a corresponding layer (21) of the first series of layers.

23. Method according to claim 20, wherein said first layer structure (21) and said second layer structure (31, 32) are established such that said cantilever (5) corresponds to a layer (22) placed on top of a first series of layers comprising at least one layer (21) and said second optical waveguide (6) is placed on top of a second series of layers comprising at least one layer (31, 32), wherein in said second series of layers, at least one layer (31) differs in thickness from a corresponding layer (21) of the first series of layers, and wherein said second series of layers comprises a different number of layers than said first series of layers.

24. Method according to any of claims 20-23, wherein the cantilever (5) is produced out of a single layer (22) made up of one single material.

25. Method according to claim 24, wherein the step of producing the cantilever (5) out of said single layer (22) comprises the step of eliminating a portion of said layer along the cantilevers so as to make the cantilever thinner and to reduce the stress gradient.

26. Method according to claim 24 or 25, wherein the cantilever (5) is made of SiO₂.

27. Method according to any of claims 20-26, wherein the second optical waveguide (6) is made of a different material than said cantilever (5).

28. Method according to claim 27, wherein said second optical waveguide is made of Si₃N₄.

29. Method according to any of claims 20-28, wherein the step of producing a structure of layers comprises the step of reducing or increasing the thickness of a portion of a first layer (21, 31) such that said first layer is provided with a first portion (21A) having a larger thickness and second portion (31A) having a smaller thickness, and constructing said first part (2) on top of a first one (21A) of said first portion and second portion, and constructing said second part (3) on top of a second one (31A) of said first portion and second portion.

30. Method according to claim 29, wherein said first layer is made of Si.

31. Method according to any of claims 29 and 30, wherein the step of producing a structure of layers further comprises the step of depositing or growing a second layer (22, 32) on top of said first layer (21, 31), said second layer corresponding to said first part (2) and to said second part (3), said second layer being made of SiO₂.

32. Method according to claim 31, further comprising the step of establishing the cantilever (5) by eliminating a part of said second layer (22), such that a remaining part of said second layer constitutes the cantilever.

33. Method according to any of claims 20-32, wherein the second optical waveguide (6) is established by depositing or growing a layer on said second layer (32) and by eliminating a part of said layer deposited on said second layer.

34. Method according to any of claims 20-33, further comprising the step of producing a third optical waveguide (8) by depositing or growing an additional layer on top of the layer (22) corresponding to the cantilever, and by eliminating a part of said additional layer, whereby said third optical waveguide is produced such that it terminates in correspondence with a beginning of the first gap (4) so as to couple light into said cantilever (5) in correspondence with said beginning of the first gap (4).

35. Method according to claim 34, wherein the layer (22) corresponding to the cantilever is selected to have a first refractive index, the structure being produced so that the cantilever becomes sandwiched between a layer being selected to have a second refractive index and said third optical waveguide (8), said third optical waveguide being selected to have a third refractive index, said first refractive index being smaller than said second refractive index and smaller than said third refractive index.

36. Method according to claim 34 or 35, wherein said third optical waveguide is made of Si₃N₄.

37. Method according to any of claims 34-36, wherein a diffraction grating (81) is established in the third optical waveguide (8) for coupling light into said third optical waveguide.

38. Method according to any of claims 20-37, wherein the cantilever is provided with a diffraction grating for coupling light into the cantilever.
